Europäisches Patentamt

European Patent Office

Office européen des brevets

(11) Publication number: **0 053 157**
**B 1**

(12) **EUROPEAN PATENT SPECIFICATION**

(45) Date of publication of patent specification: **07.01.87**

(21) Application number: **81901554.6**

(22) Date of filing: **10.06.81**

(86) International application number:
**PCT/NO81/00022**

(87) International publication number:
**WO 81/03640 24.12.81 Gazette 81/30**

(51) Int. Cl.⁴: **B 32 B 5/20, F 16 S 1/00,
B 63 B 5/24, E 04 C 2/34**

(54) **METHOD OF MAKING BOATHULLS, VEHICLE BODIES, CONTAINERS AND SIMILAR SHELL STRUCTURES, AND A TUBE LATTICE FOR USE IN MAKING SUCH STRUCTURES.**

(30) Priority: **10.06.80 NO 801723**

(43) Date of publication of application:
**09.06.82 Bulletin 82/23**

(45) Publication of the grant of the patent:
**07.01.87 Bulletin 87/02**

(84) Designated Contracting States:
**AT CH DE FR GB LI NL SE**

(56) References cited:
**DE-A-1 659 053
DE-A-2 117 166
GB-A- 820 966
US-A-2 446 860**

(73) Proprietor: **STAFF ENTREPRISER AS
Röslyngv. 4A
N-Oslo 3 (NO)**

(72) Inventor: **STAFF, Thore
Röslyngv. 4A
N-Oslo 3 (NO)**

(74) Representative: **Haggart, John Pawson et al
Page, White & Farrer 5 Plough Place
New Fetter Lane
London EC4A 1HY (GB)**

## Description

A well known method of making boat hulls, vehicle bodies, containers and similar shell structures comprises making a lattice and thereafter fastening panels to the lattice. When the article to be made is to have a curved surface it is usual to preform the panels before they are applied. The forming usually requires the use of one or more moulds, depending on the number of different shapes which are needed. By making articles in small production volumes the use of moulds is a disadvantage from economical reasons, because the manufacture of the moulds will involve a large expense per unit of articles made.

It is also known to make articles of the above mentioned kind having panels on both sides of the lattice, thus forming hollow walls, and moreover it is known to fill the cavities in such walls with an expansion material, for instance plastics foam. An example of such material is a moisture-curing polyurethane sold under the name "FOSS FLEX PU 770" by the Danish firm SADOFOSS. A problem which arises in filling the material to be expanded is to fill the correct quantity, in order to achieve complete filling of the cavities, but without filling such a quantity that an excessive pressure is created in the cavities.

DE—A—2117166 describes the manufacture of a panel by injecting foam between two boards. Perforated injection tubes are used, which are placed in several cavities between the boards and remain in the panel as reinforcing elements after foaming has taken place. There is no distribution of foam to several cavities through a tube lattice but all that is disclosed is the mere injection of foam into cavities through several independent tubes. These tubes do not form a lattice but are supported by being run through holes in partition walls between the outer boards.

GB—A—820966 discloses the placing of a first component in an expandable envelope within a mould. The envelope is expanded during the foaming. The only teaching in this patent is of the manufacture of separate foam elements enclosed in envelopes of thermoplastic sheet. A perforated tube is used in similar manner to the disclosure in DE—A—2117166, this tube being a separate injection tube and not part of the tube lattice which forms part of a shell structure.

An object of the present invention is to find a method which makes it possible to achieve filling of the cavities with an exact amount of expansion material. According to the invention this is achieved by placing one component of an insulating expansion material, in an amount apportioned to the volume of the cavities, in each cavity prior to closing the cavities by means of the panels, and that an activating component of the expansion material is injected into the thereafter closed cavities in order to cause expansion, by use of at least some of the tubes as distribution channels for said second component.

The quantity of the first component placed in each cavity can be calculated on basis of the volume of the cavity, which can of course be calculated for instance from the construction drawings, for instance by use of a computer. The amount of the second component, which is injected, is not critical. It may for instance be used a first component which cures by the presence of moisture. Thus, curing may be effected by the injection of water or water vapour. Preferably a polyurethane is used as the first component, or another material, which increases in volume during the foaming. This ensures that the cavities are completely filled with expansion material.

The water or water vapour may be supplied under such pressure that the expansion material is prevented in penetrating into the apertures in the tube walls. Thereby is prevented that the tubes are filled with expansion material, and the tubes, or at least some of the tubes, may be utilized as guiding or flow channels, for instance for electric wiring, cables or wires, conduits for fuel or other fluids, or the tube may constitute buoyancy chambers in boat hulls. For instance liner tubes or hoses may be inserted in the lattice tubes after the expansion or foaming of the expansion material has taken place, in order to prevent that for instance fuel leaks through the apertures in the lattice tubes and into the expansion material. For the purpose of inserting such liner tubes or hoses the lattice tubes may for instance be perforated at their ends. Prior to and during the injection of the activating component of the expansion material the lattice tubes should be closed at their ends, in order to efficiently lead the activating component into the cavities.

It is possible to use small panel elements. The panel elements are placed in such a manner that their edges are located at or near the middle of the lattice tubes. The panel elements may be situated edge to edge and secured by means of glueing or welding. It is possible to make single and double curved shell structures by use of such panel elements without the necessity to preform the elements to their curved shape by means of moulds. It is possible to calculate the necessary circumferential shape and size of each panel element in its planar state in order to cover a certain area in curved state. It is preferable that those lattice tubes which the panel elements are to be secured against have means to keep the elements in their correct position. This is in particular of importance when glue is used to fasten the elements. The lattice tubes, or at least some of the tubes, may for instance have longitudinal ribs which the edges of the panel elements come into engagement with. The elements are given their curved shape manually simultaneously with the application, and the elements will then press against the ribs on the tubes. Instead of ribs the tubes may have grooves, and the panel elements are then folded along their edges, which are inserted in the grooves. Whatever means is used, the important point is to achieve that the panel elements are secured in the curved shape.

In order to make the above method possible the panels should have a relatively small thickness.

Panels made of steel or metal may for instance have a thickness of far less than 1 mm. The expansion material which is foamed in the cavities formed by the application of panel elements on both sides of the tubes lattice acts to stabilize the structure, because the material will adhere to the panel elements. Without such stabilization the structure may for many purposes get too little stability, i.e. resistance against deflection. Because the amount of expansion material can be apportioned with great exactness, it is avoided that the pressure becomes so large that the panel elements are deformed, and on the other hand is avoided the formation of cavities in the material which may reduce the stability.

By the utilization of the tubes in the tube lattice for the injection of the second component of the expansion material it is not necessary to make apertures in the panel elements and to couple injection equipment to an aperture of each cavity. The lattice tubes act as conduits during the injections, and it is sufficient to supply the second component through a single aperture or a small number of apertures into the conduit system formed by the lattice tubes.

The lattice tubes of course are very important to the strength and stability of the structure and must therefore be dimensioned and designed in accordance with the strain which occurs during the use of the structure.

In structures having more or less sharp corner edges, such as in the transition between a boat hull and the deck, in a boat bow or the transition between walls and between the walls and the top or bottom of a box shaped structure, such as a bus body or a caravan, the panel elements do not have to extend around the lattice tube which lies in such a corner edge. The tube may be exposed on the outside along the edge, whereby the panel elements may extend approximately to the tangential line between the elements and the tube. Thus, the panel elements do not have to be bent to give the correct cross sectional curvature of the corner edge, because this curvature is formed by a part of the tube surface. In for instance a boat bow may be used a tube having for instance a triangular or circular cross section, and the panel elements may, as previously mentioned, end at or near the tangential line, in such a manner that the desired corner angle is formed, and the tube may have ribs or grooves along the tangential lines. In such corner areas the tubes of course have apertures for the injection of the second component in those wall parts which are facing the cavities.

By the method according to the invention is first of all achieved an exact apportioning of expansion material in the cavities, also when the walls being made are not of even thickness. Curing of the expansion material is achieved by means of a second component which may be supplied by use of the conduit system formed by the tube lattice. Moreover, the exact apportioning of the amount of material makes it possible to make the panel wall by means of more or less small panel elements and which do not have to be given their desired curvature before they are applied, because it is possible to apply the elements in a condition of tension, in which condition the elements have the desired curved shape. Thereafter the shape of the panel elements is stabilized by means of the expansion material. It is of course not necessary that all the panel elements are curved.

In addition to the above described method the invention also relates to a tube lattice for use in making shell structures of the type disclosed above. A tube lattice in accordance with the invention comprises several tubes, of which some may extend in the entire length, width or height of the structure. At least one of the tubes which define each of the cavities which are formed when the panels or panel elements have been applied on both sides of the tube lattice have at least one aperture in the wall section which faces the cavity, adapted for injection of a second component of an expansion material which is to be made by in situ expansion of a first component, said first component being placed in each of the cavities prior to the closing of the cavity.

The tubes of the tube lattice may be interconnected by means of any known means, such as welding, which may be done both for steel tubes and plastics tubes. Also separate joining elements may be used to interconnect the ends of the tubes in the lattice.

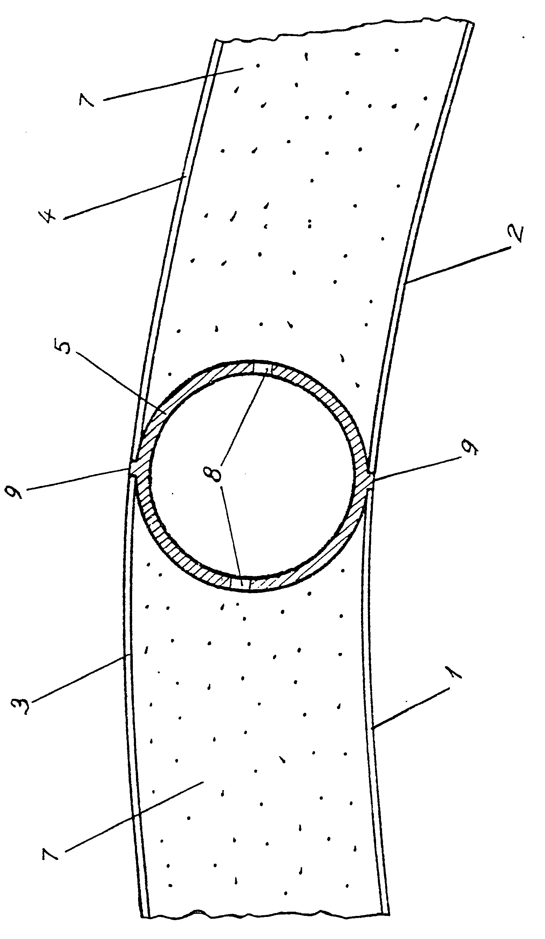

The invention is illustrated on the annexed drawing, which shows a cross section through a wall of a shell structure made in accordance with the invention. In the drawing is shown inner panels 1 and 2 outer panels 3 and 4, a tube 5 forming a part of the tube lattice and expansion material 7 in the cavities on both sides of the tube 5. The tube 5 has apertures 8 in the wall parts which face the cavities filled by expansion material. The tube 5 is provided with ribs 9 on the outside. These ribs act as contact surfaces for the edges of the panels 1, 2, 3, 4 and the primary purpose of the ribs is to keep the panels in their correct position until the panels have been properly fastened to the tubes. This is particularly important when the panels are to be curved, without being preformed with respect to curvature. All those tubes along which edges of curved panels are to be situated have ribs. The ribs 9 contribute to keep the panels in place and to keep the panels curved, at least until the panels have been secured to the tubes, for instance by glueing or welding. The ribs may have a height corresponding to the thickness of the panels, whereby the surface of the finished product will be substantially smooth.

Instead of ribs the tubes may have longitudinal grooves, adapted for the insertion of bent edges on the panels. The purpose of such grooves will be the same as for the ribs, and will not be explained further.

It will be understood that only those tubes along which the edges or panels of panel elements are to be situated need to have ribs or grooves.

Within the scope of the invention it is also possible to delete ribs or grooves. The panels or panel elements may for instance be welded to a tube along one edge, whereupon the panels or panel elements are held, by use of suitable tool means, in the desired curved shape and welded to the tube along the other edges.

By use of the method and the tube lattice in accordance with the present invention it is possible to cause foaming of the expansion material in each cavity by introducing an activating component, which may be water or water vapour, into the conduit system formed by the tube lattice, whereby the activating component will be distributed through the lattice and into all the cavities, in which expansion of the material will take place. The activating component can be introduced in the lattice through a single aperture, or through a small number of apertures.

It will also be understood that the invention is not restricted to filling all the existing cavities between the lattice tubes with expansion material. Some of the tubes may of course make frames for windows or doors, such as in a bus or a caravan, and are not covered by panels.

**Claims**

1. A method of making boat hulls, vehicle bodies, containers and similar shell structures, by fastening panels (1, 2, 3, 4) on both sides of a tube lattice (5) which defines cavities between the panels, characterised by placing in each cavity, prior to the closing of the cavities by means of the panels (1, 2, 3, 4), an amount of a first component for forming an expansion material (7) which is apportioned to the volume of that cavity, and injecting an activating component of the expansion material (7) into the cavities after the closing thereof by employing at least some of the tubes (5) of the lattice as distribution channels for the activating component.

2. A method as claimed in Claim 1, characterised in that the first component of the expansion material is activated by the injection of water or water vapour.

3. A tube lattice for making boat hulls, vehicle bodies containers and similar shell structures by a method as claimed in Claim 1 or Claim 2, characterised in that at least one of the tubes (5) has at least one injection aperture (8) in its wall facing a cavity.

4. A tube lattice as claimed in Claim 3, characterised in that at least some of the tubes (5) comprise means (9) adapted to engage the edges of the panels.

5. A tube lattice as claimed in Claim 4, characterised in that said means comprises longitudinal ribs (9), or longitudinal grooves for the insertion of bent edges of the panels.

**Patentansprüche**

1. Verfahren zur Herstellung von Schiffskörpern, Fahrzeugkarosserien, Behältern und ähnlichen Schalenstrukturen, bei welchem Platten (1, 2, 3, 4) auf beiden Seiten eines Rohrgitters (5) befestigt werden, das Hohlräume zwischen den Platten bildet, dadurch gekennzeichnet, daß in jeden Hohlraum vor dem Verschließen der Hohlräume mittels der Platten (1, 2, 3, 4) eine Menge einer ersten Komponente zur Bildung eines Ausdehnungsmaterials (7) eingebracht wird, die dem Volumen des Hohlraums angepaßt ist, und daß eine Aktivierungskomponente des Ausdehnungsmaterials (7) in die Hohlräume nach dem Verschließen derselben eingespritzt wird, indem wenigstens einige der Rohre (5) des Gitters als Verteilungskanäle für die Aktivierungskomponente verwendet werden.

2. Verfahren nach Anspruch 1, dadurch gekennzeichnet, daß die erste Komponente des Ausdehnungsmaterials durch das Einspritzen von Wasser oder Wasserdampf aktiviert wird.

3. Rohrgitter zur Herstellung von Schiffskörpern, Fahrzeugkarosserien, Behältern und ähnlichen Schalenstrukturen durch ein Verfahren gemäß Anspruch 1 oder 2, dadurch gekennzeichnet, daß wenigstens eines der Rohre (5) mindestens eine Einspritzöffnung (8) in seiner an einen Hohlraum angrenzenden Wand aufweist.

4. Rohrgitter nach Anspruch 3, dadurch gekennzeichnet, daß wenigstens einige der Rohre (5) Einrichtungen (9) aufweisen, die geeignet sind, an den Kanten der Platten anzugreifen.

5. Rohrgitter nach Anspruch 4, dadurch gekennzeichnet, daß der Einrichtungen aus Längsrippen (9) oder Längsnuten zum Einsetzen von abgebogenen Kanten der Platten bestehen.

**Revendications**

1. Procédé pour fabriquer des coques de navires, des carrosseries de véhicules, des conteneurs et des structures de coques semblables, grâce à la fixation de panneaux (1, 2, 3, 4) des deux côtés d'un treillis de tubes (5), qui définit des cavités entre les panneaux, caractérisé par la mise en place dans chaque cavité, avant la fermeture des cavités au moyen des panneaux (1, 2, 3, 4), d'une quantité d'un premier composant destiné à former un matériau expansible, qui est affecté au volume de cette cavité, et l'injection d'un composant d'activation du matériau expansible (7) dans les cavités après le fermeture de ces dernières, grâce à l'utilisation d'au moins certains des tubes (5) du treillis en tant que canaux de répartition pour le composant d'activation.

2. Procédé selon la revendication 1, caractérisé en ce que le premier composant du matériau expansible est activé grâce à l'injection d'eau ou de vapeur d'eau.

3. Treillis de tubes pour la fabrication de coques de navires, de carrosseries de véhicules, de conteneurs et de structures de coques semblables à l'aide d'un procédé selon la revendication 1 ou 2, caractérisé en ce qu'au moins l'un des tubes (5) comporte au moins une ouverture d'injection (8) dans sa paroi faisant face à une cavité.

4. Treillis de tubes selon la revendication 3, caractérisé en ce qu'au moins certains des tubes (5) comprennent des moyens (9) aptes à contacter les bords des panneaux.

7

**0 053 157**

8

5. Treillis de tubes selon la revendication 4, caractérisé en ce que lesdits moyens comprennent des nervures longitudinales (9) ou des rainures longitudinales permettant l'insertion de bords repliés des panneaux.

0 053 157